# EUROPÄISCHE PATENTSCHRIFT

(11) **EP 2 654 449 B1**
(45) Veröffentlichungstag und Bekanntmachung des Hinweises auf die Patenterteilung: **14.09.2016**
(21) Anmeldenummer: 11799685.0
(22) Anmeldetag: 16.12.2011
(51) Int. Cl.: C11B 1/00, C11B 1/14, C11B 1/10, A23L 33/105, A23L 33/115, A23L 5/20, C11B 1/02, C11B 3/04, C10L 1/02, C10L 1/18, C10G 1/04

(54) **VERFAHREN ZUR FRAKTIONIERUNG VON JATROPHASAMEN**
METHOD FOR FRACTIONATING JATROPHA SEEDS
PROCÉDÉ DE FRACTIONNEMENT DE GRAINES DE JATROPHA

(30) Priorität: 21.12.2010 DE 102010055419
(43) Veröffentlichungstag der Anmeldung: 30.10.2013
(73) Patentinhaber: GEA Mechanical Equipment GmbH, 59302 Oelde (DE)
(72) Erfinder: KIRCHNER, Stefan, 33334 Gütersloh (DE); ULLMANN, Detlef, 59302 Oelde (DE); SPEISER, Ines, 33415 Verl (DE)
(74) Vertreter: Specht, Peter
(86) Internationale Anmeldenummer: PCT/EP2011/073108
(87) Internationale Veröffentlichungsnummer: WO 2012/084729

(56) Entgegenhaltungen:
- US-A- 4 808 426
- J MARTINEZHERRERA ET AL: "Chemical composition, toxic/antimetabolic constituents, and effects of different treatments on their levels, in four provenances of L. from Mexico", FOOD CHEMISTRY, Bd. 96, Nr. 1, 1. Mai 2006 (2006-05-01), Seiten 80-89, XP55018266, ISSN: 0308-8146, DOI: 10.1016/j.foodchem.2005.01.059
- WILHELM HAAS ET AL: "Detoxification experiments with the seed oil from Jatropha curcas L.", INDUSTRIAL CROPS AND PRODUCTS, Bd. 12, Nr. 2, 1. August 2000 (2000-08-01) , Seiten 111-118, XP55018268, ISSN: 0926-6690, DOI: 10.1016/S0926-6690(00)00043-1

## Beschreibung

Die EP 0 267 933 A1 offenbart ein Verfahren zur Gewinnung von Pflanzenöl, bei welchem zumindest ein Reagenz zur Reduzierung des Phospholipidgehaltes zu dem ölhaltigen Material zugegeben wird. Dabei werden in vorbereitenden Schritten Pflanzen, wie z.B. Sojabohnen oder Mais, gesäubert, getrocknet und geschält. Anschließend können diese Pflanzenteile gemahlen werden. Dabei wird beispielsweise zusätzlich Öl zugesetzt. Bei der Extraktion von Pflanzenöl aus diesen Sojabohnen oder Mais wird u.a. auch Salzsäure eingesetzt. Diese dient der Reduzierung des Phospholipidgehaltes. Dabei erfolgt eine Umwandlung eines hydrophoben Phospholipids in eine hydratisierbare Spezies. Da die Hydratisierung von Phospholipiden allerdings reversibel ist, müssen zudem auch Chelatbildner, Fällungsmittel oder dergleichen zur Stabilisierung der Phospholipide in der wässrigen Lösung eingesetzt werden.

Die GB 1 179 584 A offenbart ein Verfahren zur Gewinnung von Fetten. Dabei wurde die wässrige Extraktion von tierischen Fetten dahingehend optimiert, dass ein derartiges Fett in einem pH-Bereich zwischen 4,1 bis 5,8 extrahiert wurde. Dieser pH-Wert kann u.a. durch Zugabe von Säuren, so z.B. Salzsäure, Schwefelsäure, Zitronensäure oder Essigsäure erreicht werden.

Die WO 98/53698 A1 und die EP 1 905309 A1 offenbaren eine Verarbeitung von Rapssamen, Sojabohnen, Mais und Sonnenblumensamen. Diese werden zunächst gemahlen. Anschließend werden Feststoffe entfernt. Schließlich erfolgt ein Waschen der Öl- Phase, wobei beim Waschen ein pH-Wert zwischen 2-10 durch Zugabe von Tris-HCl einstellbar ist. Anschließend erfolgt eine Formulierung zu einer Emulsion. Diese Emulsion wird im Lebensmittelbereich und im Futtermittelbereich genutzt, aber auch in Verbindung von pharmazeutischen und kosmetischen Erzeugnissen.

Die GB 1 402 769 A offenbart ein Verfahren zur Gewinnung von Öl durch einen enzymatischen Vorgang. In Folge der enzymatischen Behandlung, welche bei pH-Werten zwischen pH=3 bis pH=6 stattfindet, kommt es zur Zersetzung der Zellwände des ölhaltigen pflanzlichen Produktes unter Freisetzung des Öls innerhalb von 2 bis 24 Stunden.

Die EP 2 163 159 A1 offenbart eine Gewinnung von Öl aus einer Rapssaat. Dabei erfolgt nach einem Bereitstellen und Schälen der Rapssaat das Pressen der Rapssaat, wobei ein Presskuchen und Rapsöl entsteht. Das Rapsöl wird in einem Verfahrensschritt, welcher als "Degumming" bezeichnet wird, von Phospholipiden befreit, welche in einem Reaktionstank agglomerieren. Daran schließt sich ein Verfahrensschritt der Trocknung und der Veresterung an. Dabei erfolgt durch Umesterung eine Trennung von Biodiesel und Rohglycerin. In weiteren anschließenden Schritten können Proteine und verschiedene andere Wertstoffe aus den verschiedenen Fraktionen des Rapsöls oder des Rapspresskuchens gewonnen werden. Das hier beschriebene Verfahren eignet sich nur bedingt zur Herstellung von Kraftstoffen, da die Ölausbeute beim Pressen von geschälter Rapssaat sehr niedrig ist. Bedingt durch den hohen Restfettgehalt im entölten Presskuchen lässt sich dieser nur bedingt verwerten.

Bei der Verwendung von Kraftstoffen aus Ölpflanzen hat sich insbesondere das Öl aus den Jatropha-Samen, auch Purgiernüsse genannt, als interessante Alternative erwiesen, da dieses Jatrophaöl eine höhere Cetanzahl beispielsweise gegenüber Rapsöl aufweist und da die Jatrophapflanze auch auf nährstoffarmen Böden wächst.

Heutige Verfahren nutzen in erster Linie eine Pressung der Jatrophasamen. Um hierbei eine hohe Ausbeute zu erreichen, ist ein nennenswerter Schalenanteil im Produkt zwingend erforderlich. Die anfallenden Nebenprodukte werden als Düngemittel wieder auf die Jatropha Plantagen verbracht, oder zu Pellets gepresst als Brennstoff vermarktet.

Da Jatropha neben Öl auch einen großen Anteil an hochwertigen Proteinen besitzt, soll versucht werden, die bei der Ölgewinnung anfallenden Nebenprodukte so zu gewinnen, dass sie als hochwertiges Futtermittel vermarktet werden können.

Ein Problem hierbei besteht in dem relativ hohen Anteil an holzigen Bestandteilen (unverdaulich) in der Schale der Saat und in dem hohen Gehalt an Phorbolestern, die eine toxische Wirkung auf die meisten Tiere haben.

Das heute eingesetzte Verfahren der Pressung (Exzenter Schneckenpressung) benötigt jedoch den Schalenanteil, um das Öl abzupressen, der Presskuchen enthält somit sämtliche Schalenkomponenten.

So weist dieses Produkt einen geringeren Proteinanteil und einen hohen Anteil unverdaulicher Komponenten auf, ist also als Futtermittel im Prinzip nicht oder nur bedingt einsetzbar.

Eine mögliche Entgiftung, also im Wesentlichen die Abtrennung von Phorbolestern aus dem Presskuchen mittels Methanol wird in der WO 2010/092143 A1 beschrieben. Nach dieser Lehre wird mittels eines technisch recht aufwendigen Verfahren Phorbolester extrahiert, ohne jedoch den Proteingehalt des Produktes signifikant zu verändern. Durch mehrfache Extraktion mittels Methanol in einem Verhältnis von 1:10 wird dem Material Phorbolester entzogen. In der Beschreibungseinleitung der WO 2010/092143 A1 werden zudem weitere Verfahren zur Reduzierung des Phorbolestergehaltes einer Jatrophasaat beschrieben, deren gemeinsames Problem jedoch die nur bedingte Wirtschaftlichkeit ist.

So ist - bedingt durch die Eigenschaften von Methanol (explosiv, toxisch, wertvoll) - die vollständige Abtrennung und Rückgewinnung großer Mengen des Lösungsmittels eine Voraussetzung für den wirtschaftlichen Betrieb. Dies macht dieses Verfahren teuer, so dass der wirtschaftliche Einsatz dieses Verfahrens problematisch ist.

Eine klassische Hexan- Extraktion kann zur Verringerung der Phorbolester nicht eingesetzt werden, da diese nicht in Hexan nicht oder nur schwer löslich sind.

Hier geht die Erfindung einen anderen, wirtschaftlicheren Weg, der in den Ansprüchen 1, 2 und 23 beschrieben ist.

Vorteilhafte Ausgestaltungen sind in den Unteransprüchen angegeben.

Derart können außer einem Rohöl als Kraftstoff auch weitere Inhaltsstoffe der Jatrophasaat sehr wirtschaftlich verwertet werden. Die Ansprüche 1, 2 und 23 betreffen jeweils verschiedene Varianten, bei welchen vorteilhaft verschieden viele Wertstoffphasen aus verschieden vorverarbeiteten oder nicht vorverarbeiteten Jatrophasamen gewonnen werden.

Das hier beschriebene Verfahren unterscheidet sich von heute eingesetzten Verfahren signifikant, da hier die Hauptkomponenten Schalen (40 %), Öl (35 %), proteinreiches Schrot (25 %) und Phorbolester separat gewinnen lassen.

Durch die Abtrennung von Phorbolestern kann darüber hinaus das proteinreiche Schrot als Futtermittel verwertet werden. Derart kann eine deutlich verbesserte Wertschöpfung als bei den herkömmlichen Verfahren erzielt werden.
Es werden die Schalenanteile der Jatropha- Saaten entfernt, die bis zu 40 % des Gesamtgewichtes betragen können. Diese können z.B. zur Energieerzeugung der Anlage genutzt werden, was besonders in abgelegenen Orten ohne Stromversorgung wichtig sein kann. So kann der Proteingehalt im entölten Schrot von ca. 18 % auf 55 % angehoben werden.

Eine weitere Voraussetzung bei der Nutzung des proteinreichen Schrots ist die Verringerung des Phorbolestergehaltes, so dass das Schrot gefahrlos als Tiernahrung eingesetzt werden kann.

Das hierbei gewonnene Rohöl ist ein Zwischenprodukt bei der Gewinnung eines Kraftstoffs. Es enthält einen Anteil an Restwasser und ggf. auch noch kleinere Feststoffpartikel des Pflanzensamens.

Das bevorzugt als Ergänzung eingesetzte Ölpolieren ist ein Verfahren zur Reinigung des Öls. Hierbei wird das Rohöl mittels Filtertechnik oder Separationstechnik weiterverarbeitet und von Feststoffresten und Wasser gereinigt oder getrennt. Dabei wird der Feststoffgehalt des polierten Rohöls derart reduziert, dass dieses Öl als Kraftstoff einsetzbar ist. Durch das Trocknen wird der Restwassergehalt im Kraftstoff etwa auf vorzugsweise 0,1 Gew-% oder weniger gesenkt.

Die bei der Ölabtrennung gewonnene Feststoffphase ist ein Zwischenprodukt bei der Gewinnung eines proteinreichen Schrotes.

Das so gewonnene Öl ist extrem arm an Phosphaten, Magnesium und Calzium und entspricht ohne weitere Verarbeitung poliert der Norm für Bio-Kraftstoffe (DIN 51605). Im Gegensatz zu Pressölen kann so eine aufwendige Raffination von Ölen vermieden werden.

Durch Zusatz von Öl, welches keinen oder nur einen sehr niedrigen Phorbolestergehalt aufweist (genügend niedriger als im im Phorbolestergehalt zu reduzierenden Schrot), werden im nassen Schrot verbliebene Phorbolester in die Ölphase überführt. Durch Abscheiden des Öls wird der Phorbolestergehalt im Schrot soweit gesenkt, dass es als Futtermittel verwendet werden kann.

Das Schrot kann vorzugsweise zur Tiernahrung eingesetzt werden.

Erfindungsgemäß erfolgt die Fraktionierung von Jatrophasamen, also den Purgiernüssen der Jatrophapflanze.
Bevorzugte Ausführungsvarianten des Verfahrens sind Gegenstand der Unteransprüche.

Voraussetzung für eine Abtrennung von Phorbolestern und zur Gewinnung von proteinreichem Schrot ist zunächst die effektive Abtrennung des Öls.

Dabei nachfolgend zunächst nochmals näher die pH-Wert-Einstellung des Schrotes 200 betrachtet.

Wasser und Säure können getrennt zur Suspension zugeführt werden oder bereits vor der Zugabe zur Suspension zu einer verdünnten Säure vermischt werden, wobei die verdünnte Säure vor der Zugabe bereits einen entsprechenden Konzentration aufweist, um den pH-Wert der Suspension auf 3,5 oder weniger einzustellen.

Bei der Gewinnung von Kraftstoff aus Jatrophasamen mit einem Fettgehalt von mehr als 30 Gew.-%, vorzugsweise mehr als 40 Gew.-% hat es sich überraschend gezeigt, dass die Ausbeute an Rohöl bei einem pH-Wert von weniger als 3,5 signifikant steigt.

Zwar ist bei einem pH-Wert von <= 3,5 bereits ein signifikantes Ansteigen der Ausbeute an Öl gegenüber einer pH-neutralen Verarbeitung zu beobachten, eine besonders vorteilhafte Erhöhung der Ausbeute kann allerdings bei einer Suspension mit einem pH-Wert <= 3,2 erreicht werden.

Eine weitere Erhöhung der Ausbeute an Öl kann man erreichen, indem die Einstellung des pH-Wertes der Suspension speziell durch Salzsäure erfolgt.
Einen möglichst umfangreichen Aufschluss von Rohöl aus den zerkleinerten Pflanzensamen oder Nüssen kann durch eine Verweilzeit von mindestens 30 min, vorzugsweise 30-60 min, nach der Zugabe der Säure erreicht werden. Da eine höhere Temperatur den Aufschluss des Rohöls, aus den Pflanzensamen oder den Nüssen begünstigt, ist es von Vorteil, wenn mit dem zugegebenen Wasser eine Temperatur von 60-80°C, vorzugsweise 80-95°C im Produkt eingestellt wird.

Die Pflanzensamen können vor dem Zerkleinern gereinigt werden, um so an den Pflanzen anhaftende Fremdstoffe zu beseitigen. Darüber hinaus kann der Anteil an Feststoffen und Fremdsubstanzen in der Suspension vor dem Zerkleinern durch Schälen und Trocknen im Vorfeld verringert werden.

Alternativ oder zusätzlich kann die Ausbeute an Kraftstoff erhöht werden, indem das Zerkleinern der Pflanzensamen oder Nüsse durch eine Mühle mit einem feinen Mahlgrad erfolgt. Durch den feineren Mahlgrad der Pflanzensamen oder Nüsse wird weniger Rohöl im Inneren der Feststoffanteile zurückgehalten.

Optional kann das Abscheiden des Rohöls durch mehrfaches Entölen aus der Suspension erfolgen. Dabei wird die Suspension nach einer ersten Entölung mit einem Gehalt an Rohöl von 4 Prozent oder weniger in einen zweiten Dekanter eingeleitet oder in den Dekanter der ersten Entölung für eine nochmalige Entölung der Suspension rückgeführt.

Durch Mischen der so gewonnenen wässrigen Feststoffphase mit Öl ohne Phorbolestern können die noch im Produkt vorhandenen Phorbolester extrahiert werden.

Anschließend wird dieses Öl mit den gelösten Phorbolestern im Dekanter abgetrennt. Als Extraktionsmittel kann Fremdöl oder vorzugsweise Jatropha- Öl eingesetzt werden, das zuvor durch geeignete Verfahren von den Phorbolestern getrennt wurde.

Ein Waschen des Rohöls zur Gewinnung des Kraftstoffes kann vorteilhaft in einer Zentrifuge, vorzugsweise einem Separator, erfolgen.

Nachfolgend wird die Erfindung an Hand eines Ausführungsbeispiels, der Fraktionierung von Jatropha Samen, unter Bezug auf die Zeichnungen näher beschrieben. Es zeigt:
- Fig.1: eine Anlage zur Gewinnung eines Kraftstoffes aus Jatropha-Samen;
- Fig.2: ein Diagramm zur Veranschaulichung der Abhängigkeit des Ölgehaltes in der entölten Suspension bei verschiedenen pH-Werten;
- Fig.3: ein Diagramm zur Veranschaulichung der Abhängigkeit des Ölgehaltes in der entölten Suspension von der verwendeten Säure;
- Fig. 4: ein Diagramm zur Veranschaulichung der Abhängigkeit des Ölgehaltes in der entölten Suspension von der Verweilzeit; und
- Fig. 5: ein Flussdiagramm zur Veranschaulichung eines bevorzugten erfindungsgemäßen Verfahrensablaufs.

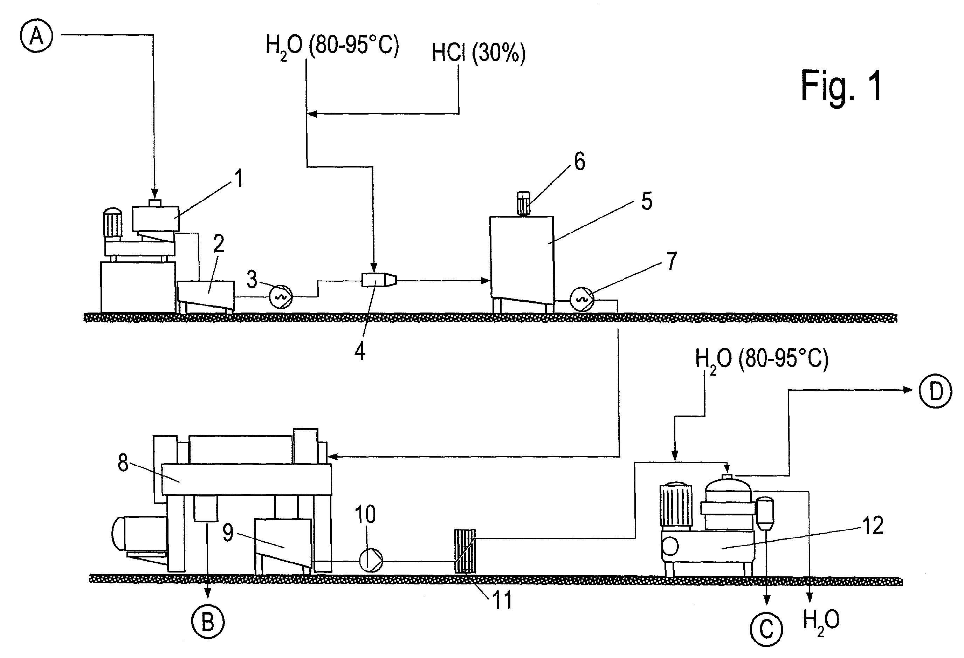

Fig. 1 zeigt schematisch eine Anlage mit welcher in bevorzugter Ausgestaltung Jatropha-Samen A zu einem Jatropharohöl D verarbeitet werden, welches als Kraftstoff geeignet ist, wobei die Jatropha-Samen bzw. -nüsse vorab vorzugsweise gereinigt und geschält wurden.

In einem ersten Schritt der Bearbeitung werden die Jatropha-Samen A zunächst zum Zerkleinern in eine Mühle 1 überführt. Dabei werden die Purgiernüsse in einem Mahlwerk aufgebrochen und zerkleinert. Dieser Mahlprozess kann ggf. durch Zufuhr weiteren Öls zusätzlich begünstigt werden. Die Bruchstücke der zerkleinerten Jatropha-Samen weisen dabei eine bestimmte mittlere Korngröße auf, welche durch das Mahlwerk vorgegeben wird. Dies kann beispielsweise in Spaltmühlen durchgeführt werden.

Bereits vor dem Zerkleinern werden die Jatropha-Samen geschält und/oder getrocknet. Durch diese vorbereitenden Schritte wird die Zerkleinerung bzw. das Mahlen der Jatropha-Samen erleichtert. Gleichzeitig wird durch das Abtrennen der Schalenanteile der Proteingehalt signifikant erhöht.

Dies kann als entscheidender Vorteil gegenüber den heute verwendeten Verfahren gesehen werden, da jetzt die Schalenfraktion separat genutzt werden kann, und der Proteingehalt des entölten Schrotes eine Verwendung als Tiernahrung zulässt.

Nach dem Mahlen werden die zerkleinerten Jatropha-Samen als Öl-Feststoffgemisch in einen Puffertank 2 überführt. Von dort werden sie über eine erste Exzenterschneckenpumpe 3 zu einem Mischer bzw. einer Mischstation 4 transportiert.

In der Mischstation 4 wird dem vermahlenen Produkt heißes Wasser und Säure, vorzugsweise HCl, zugeführt und so vermischt, dass die Suspension eine erhöhte Temperatur von 60-80°C, vorzugsweise 80 - 95°C aufweist. Bei diesem besonders bevorzugtem Einleiten von heißem Wasser und Säure, entsteht eine Suspension aus Feststoffen, Öl und Wasser, die einen pH-Wert von <= 3,5 aufweist.

Für eine Steigerung der Ausbeute an Kraftstoff und zur Gewinnung eines öl- armen Schrotes ist es von wesentlicher Bedeutung, dass die gebildete Suspension einen pH-Wert von<= 3,5 aufweist.

Dabei können das heiße Wasser und die Säure, vorzugsweise konzentrierte Salzsäure, auch getrennt in die Mischstation eingeleitet werden und durch intensives Rühren eine Suspension mit einem pH-Wert von <= 3,5 ausbilden.
Dieses Abfolge von Verfahrensschritten ist zwar nicht bevorzugt, da lokal eine hohe Konzentration an Säure in der Suspension gebildet wird, kann aber alternativ zur Zugabe einer verdünnten Säure für die Bildung einer Suspension verwandt werden.

In einer weiteren, allerdings ebenfalls weniger bevorzugten Ausführungsvariante der Erfindung kann zur Einstellung des pH-Wertes auch eine andere Säure, so z.B. Schwefelsäure oder Zitronensäure, anstelle von Salzsäure, genutzt werden.

Anschließend wird die Suspension vorzugsweise in einen Verweilbehälter 5 überführt. Es hat sich überraschend gezeigt, dass die Rohölausbeute innerhalb einer Verweilzeit zusätzlich vorteilhaft erhöht werden kann. Dabei wird die Sedimentation durch schonendes Rühren verhindert und verbessert so die Ausbeute. Hierfür weist der Verweilbehälter 5 ein Rührwerk 6 auf.

Die Verweilzeit im Verweilbehälter 5 kann zwischen vorzugsweise 30-60 Minuten betragen. Abhängig vom Rohmaterial und der eingesetzten Säure kann die Rohölausbeute bei längerer Verweilzeit sogar wieder geringfügig abnehmen.

Von dem Verweilbehälter wird die Suspension über eine zweite Exzenterschneckenpumpe 7 zu einem Dekanter 8 transportiert. Dieser Dekanter kann als Zweiphasentrenndekanter ausgebildet sein, wobei die erste Phase aus entölter Suspension mit einem Restölgehalt von weniger als 6 Gew.-%, bezogen auf den Gehalt an Feststoffen in der Suspension, besteht und die zweite Phase aus pflanzlichem Rohöl und ggf. dispers gelöste Feststoffpartikel und Restwasser.

Alternativ zu einem Zweiphasentrenndekanter kann die Entölung auch in einem 3-Phasendekanter oder in einer Kombination aus Klärdekanter und anschließendem 3-Phasen- Separator durchgeführt werden.

Das pflanzliche Rohöl wird in einen Behälter 9 gesammelt und über eine dritte Exzenterschneckenpumpe 10 und über einen Wärmetauscher 11, vorzugsweise einen Plattenwärmetauscher, an eine Zentrifuge 12 weitergeleitet. Zwischen dem Wärmetauscher 11 und der Zentrifuge 12 ist ein Zulauf für heißes Wasser angeordnet. Dieses Wasser weist vorteilhaft eine Temperatur zwischen 60-80 °C, vorzugsweise 80-95 °C, auf.

Die Zentrifuge 12 ist vorzugsweise als Dreiphasen-Separator ausgebildet, wobei im Separator sowohl eine Trennung von der Wasser und Ölphase erfolgt, als auch eine Klärung der Öl- und Wasserphasen von Feststoffpartikeln.

Aus der Zentrifuge wird somit eine klare Ölphase als Jatrophaöl abgeführt, welches durch Neutralisieren und Trocknen zu einem Produkt weiterverarbeitet werden kann, welches sich für den Einsatz als Kraftstoff in Verbrennungsmotoren eignet.

Weiterhin kann dabei der Restwassergehalt der Ölphase im Anschluss an das Ölpolieren durch Vakuumtrocknen, hier nicht dargestellt, auf einen Restwassergehalt von etwa 0,05% oder weniger gesenkt werden.

Durch das Neutralisieren kann der Gehalt an freier Fettsäure reduziert werden.

Ein wesentlicher Schritt bei der Optimierung zur Gewinnung von Öl aus Jatropha-Samen liegt in der Optimierung der Einstellung des pH-Wertes auf <= 3,5.

Eine weitergehende vorteilhafte Erhöhung der Ausbeute wird durch die Wahl einer geeigneten Säure, der Verweilzeit, dem Verhältnis von Rohöl und Wasser und/oder Säure in der Suspension und der Feineinstellung des pH-Wertes erreicht.

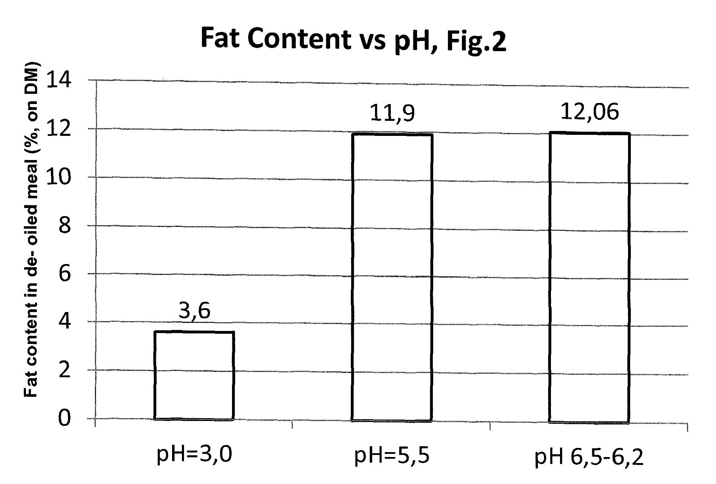

Fig.2 zeigt in einem Diagramm Messwerte des Restölgehaltes in entölten Suspensionen bei unterschiedlichen pH-Werten, welche aus einer Laborzentrifuge 8 abgeführt wurden. Dabei ist ein geringerer Restölgehalt signifikant für eine bessere Ausbeute an Jatrophaöl und einen höheren Proteingehalt im Schrot. Ein hoher Restölgehalt der Suspension mindert somit die Ausbeute des gewonnenen Jatrophaöls und verringert den Proteingehalt im Schrot.

Die Temperatur der Suspension war stets 90°C, die Verweilzeiten im Verweilbehälter waren stets 60 min und das Verhältnis Wasser zum Feststoff- Öl-Gemisch war stets 1 + 1. Die Versuche pH = 3 wurden mit Salzsäure durchgeführt. Bei der Suspension bei pH = 5,5 wurde Zitronensäure zur Einstellung des pH-Wertes benutzt.

Die unterschiedlichen Restölgehalte der im Diagramm abgebildeten Messwerte zeigen keine signifikanten Unterschiede des Restölgehaltes bei pH-Werten zwischen 5,5-6,5 zum Restölgehalt einer wässrigen Extraktion im pH-neutralen Bereich. Bei einem pH-Wert von 3,0 allerdings ist eine deutliche Verringerung des Restölgehaltes auf 3,6% zu beobachten. Wie aus dem Diagramm ersichtlich ist, wird bei einer Senkung des pH-Wertes auf unter 3,0 überraschend eine Ausbeuteerhöhung an Jatrophaöl festgestellt.

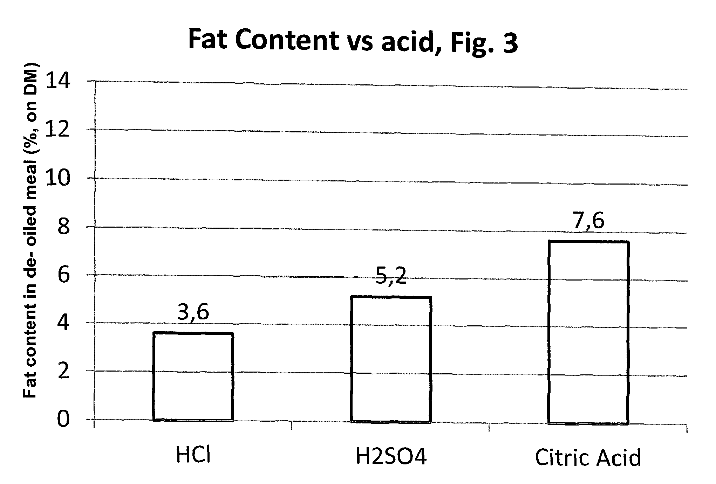

Neben dem wesentlichen Faktor des pH-Wertes, führt auch der Einsatz unterschiedlicher Säuren zu unterschiedlich hohen Ausbeuten an Jatrophaöl. Im Diagramm von Fig.3 wurde Zitronensäure, Salzsäure und Schwefelsäure in Wasser unter vergleichbaren Messbedingungen miteinander verglichen. Dabei waren die Temperaturen der Suspension stets 90°C, der pH-Wert der Lösungen war stets 3,0, die Verweilzeiten im zweiten Puffertank stets 60 min und das Verhältnis Wasser zum Feststoff-Öl-Gemisch war stets 1/1.

Dabei geht aus Fig.3 hervor, dass die Extraktion mit heißem Wasser unter Zugabe von Salzsäure gegenüber Schwefelsäure und Zitronensäure bevorzugt ist, da dabei ein besonders hoher Anteil an Jatrophaöl aus den Feststoffen der Suspension extrahiert werden kann.

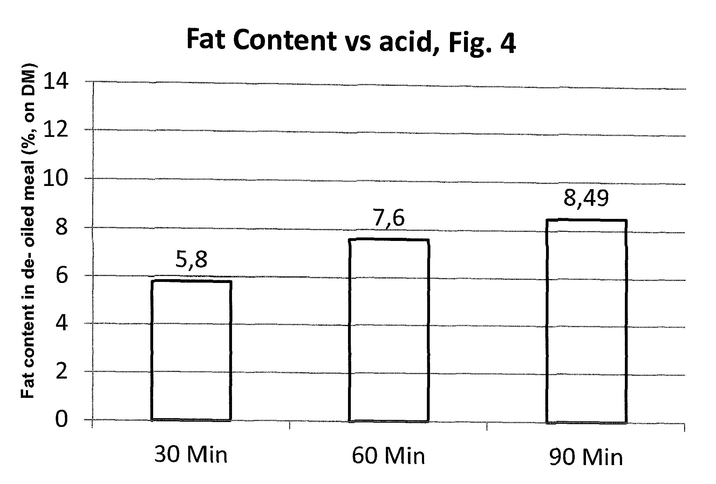

Fig.4 zeigt eine Tendenz hinsichtlich der Verweilzeiten der Suspension im Verweilbehälter. Diese Versuche wurden unter Zugabe einer wässrigen Zitronensäurelösung bei einem pH-Wert von 3.0 durchgeführt. Dabei kann man erkennen, dass eine Verweilzeit von 30 min ausreichend ist, um den Aufschluss der Ölphase aus der Suspension zu erreichen.

Eine zu lange Verweilzeit (über 60 min) im Verweilbehälter führt zu einer Erhöhung des Restölgehaltes und somit zu einer Verringerung der Gesamtausbeute. Die Abhängigkeit von der Verweilzeit ist allerdings auch zumindest teilweise von der verwendeten Säure abhängig. So hat sich die Verweilzeit von 30-60 min bei der Verwendung von HCl als besonders vorteilhaft erwiesen.

Es hat sich in Versuchen herausgestellt, dass eine zusätzliche Erhöhung der Ausbeute an Kraftstoff erreicht werden kann, sofern das Verhältnis von Wasser zu Produkt nach der Zugabe von Wasser und Säure in Schritt b) im Bereich zwischen 1/2 bis 2/1 liegt.

Besonders bevorzugt ist der Wasseranteil in der Suspension größer als 35 Gew.-%, vorzugsweise größer als 40 Gew. %.

Es hat sich insbesondere gezeigt, dass ein Verhältnis von 1+1 zwischen dem Feststoff-Ölgemisch und der wässrigen Phase, also ein Wassergehalt von etwa 50% in der Suspension, besonders vorteilhaft ist.

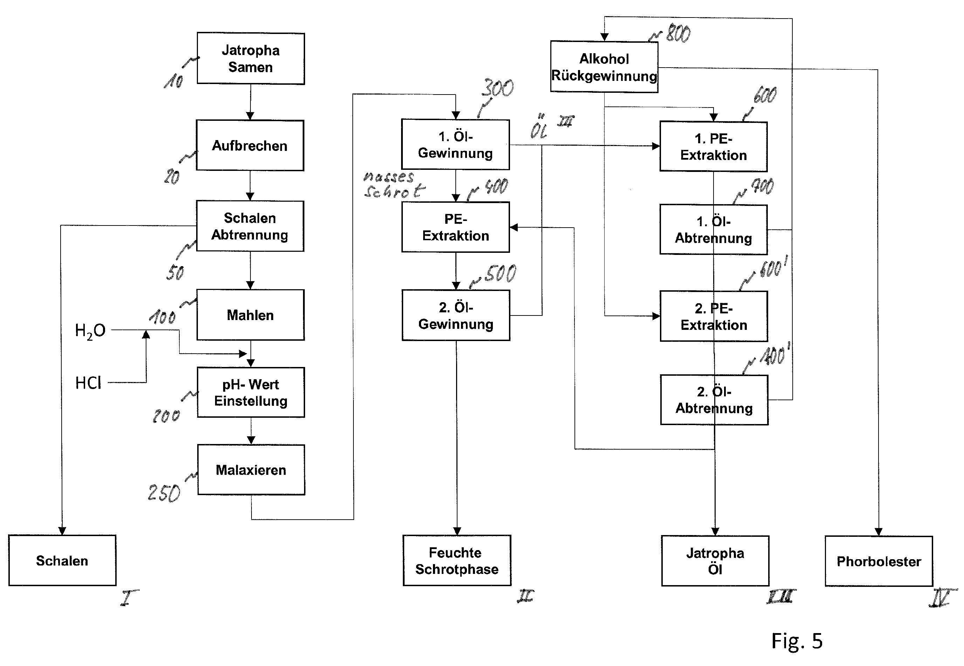

In Ergänzung sei nunmehr eine Variante der Erfindung unter Bezug auf Fig. 5 näher erläutert.

### Die nachfolgende Nummerierung der Schritte dient der leichteren Zuordnung

Zunächst wird die Jatropha-Saat bereit gestellt (Schritt 10).

Sodann wird diese aufgebrochen (Schritt 20).

Dann wird die Jatropha Saat geschält (Schritt 50). Dabei wird der holzartige Schalenanteil von ca. 35- 40 % (w/w) abgetrennt und somit der Proteingehalt der geschälten Jatrophasamen gegenüber der Saat bereits auf einfache Weise von ca. 16 % (w/w) auf ca. 25 % (w/w) erhöht.

Neben der Erhöhung des Proteingehaltes werden beim Schälen auch ca. 16 % der Phorbolester mit den Schalen ausgetragen und somit die Menge an Phorbolestern im Restprodukt bereits auf einfache Weise verringert.

In einem folgenden Schritt 100 werden die Jatropha Kerne fein vermahlen. Versuche zeigten, dass eine Feinheit mit 50 % der Partikel kleiner als 22 µm (10 % kleiner 4 m, 90 % kleiner 280 µm) eine optimalen Zellausschluss bewirkten. Hierbei werden die Pflanzenzellen so weit aufgeschlossen, dass das Öl aus den Zellen austritt und frei vorliegt.

Anschließend wird das so aufgeschlossene Material mit Wasser vermischt und in einem Rührbehälter vorsichtig verrührt. Durch Verringerung des pH- Wertes auf pH < 3,2 durch Zugabe von Säure hat sich überraschender Weise gezeigt, dass der Restölgehalt stark abgesenkt und somit die Ölausbeute signifikant gesteigert werden konnte (Schritt 200). Dabei haben unterschiedliche Säuren einen unterschiedlich starken Einfluss auf den Restölgehalt.

So konnte der Restölgehalt von 15,5 % (w/w) ohne pH- Wertverschiebung auf 8,5 % bei Zugabe von Schwefelsäure verringert werden konnte. Bei Nutzung von Salzsäure konnte der Restölgehalt auf 3,5 % gesenkt werden

Versuche haben gezeigt, dass durch Einhaltung der optimalen Verweilzeit die Ausbeute an Öl signifikant gesteigert werden kann. So konnte mit einer Verweilzeit von 60 - 90 Minuten die besten Resultate erzielt werden (Schritt 250).

Sodann erfolgt eine erste Trennung im Zentrifugalfeld, insbesondere eines Dekanters im Schritt 300): Abscheiden von Jatrophaöl (Jatropha-Rohöl) aus der ölhaltigen Suspension im Zentrifugalfeld zur Bildung der Jatrophaölfraktion und der nassen Feststoff(Schrot-)-Fraktion.

Überraschender Weise hat sich auch gezeigt, dass der Gehalt an Phorbolestern (PE) sowohl in der Ölphase als auch in den Feststoffphasen (Schalen und Schrot) in derart niedriger ist als bei der Trennung mittels Schnecken- Pressen (siehe Versuch 7 weiter unten). Da dieser Stoff als stark toxisch einzustufen ist, ist der Abbau von PE als Vorteil gegenüber dem heute gängigen Verfahren einzuschätzen.

Im wässrigen Verfahren wird so die Phorbolestermenge im Schrot deutlich, beispielsweise um 92%, verringert, während die Verringerung im Presskuchen niedriger lag, so überraschend beispielsweise lediglich 67 % betrug..

Die im entölten Feststoff verbleibenden Phorbolester sind mit einer Konzentration von ca. 0,7 mg/g immer noch als toxisch einzustufen, so dass weitere Schritte nötig sind, um die Konzentration weiter abzusenken.

Hierzu wird der entölte Feststoff (nasses Schrot) mit phorbolester-freiem Öl extrahiert (Schritte 400, 500). Diese Schritte umfassen das Zugeben von Pflanzenöl (als Teil des Schrittes 400) und das Abtrennen einer Ölphase aus dem nassen und mit dem Öl versetzten Schrot im Zentrifugalfeld im Schritt 500.

Es ist für das Ergebnis vorteilhaft, wenn im Schritt 400) Pflanzenöl im Verhältnis zwischen 1 + 10 bis 1 + 1 - 1. Wert: Pflanzenöl; 2: Wert Restölgehalt in Schrotfraktion - eingesetzt wird.
Es ist denkbar, die Schritte 400 und 500 mehrfach zu wiederholen (3., 4.... Ölgewinnung).

Die derart gewonnene feuchte Mehl- bzw. Schrot-/Feststoffphase ist genügend im Phorbolestergehalt reduziert, um sie als Wertstoff verwenden zu können.
Ein besonderer Vorteil dieses Verfahrens ist, dass Öl als Extraktionsmittel keine besonderen Vorkehrungen in Bezug auf Explositionsschutz und restlose Rückgewinnung benötigt.

In einem ersten Versuch (Versuch 8) wurde anstelle von extrahiertem Jatropha Öl ein handelsübliches Rapsöl eingesetzt. 100 g im oben beschriebenen Verfahren entölte Jatropha- Saat wurde mit 10 g Rapsöl vermischt und in einer Laborzentrifuge für 3 Minuten bei 4,500 g geschleudert.

Das frei vorliegende Öl wurde abgetrennt. Der so entölte Feststoff wurde getrocknet und der Phorbolestergehalt in der Feststoffphase und in der Öl-Phase untersucht.

Der Phorbolestergehalt in der Feststoffphase konnte von 0,68 mg/g auf 0,38 mg/g reduziert werden. In der Öl-Phase wurde der Gehalt von 0,00 mg/g (Rapsölzugabe) auf 2,65 mg/g im Mischöl aus dem Rapsöl und dem Restöl im Schrot erhöht. So kann gezeigt werden, das Phorbolester mit Pflanzenöl extrahiert werden kann.

Das insgesamt im beschriebenen Verfahren gewonnene Öl (Jatrophaöl, Mischöl) zeichnet sich überraschender Weise unter anderem durch einen sehr niedrigen Phosphor-, Kalzium- und Magnesiumgehalt aus (Versuch 6). Die gemessenen Werte lagen unterhalb der Nachweisgrenze. Solch niedrige Werte lassen sich nur mit klassischen Verfahren nur bedingt, und wenn dann mit erheblichem Aufwand durch eine Raffination erzielen.

Da phorbolester-freies Pflanzenöl nicht immer vorhanden ist, kann alternativ auch Jatropha- Öl eingesetzt werden, aus dem zuvor die Phorbolester abgetrennt wurden. Dies ist in Fig. 5 rechts dargestellt.

In einem ersten Schritt wird hierfür das phorbolesterhaltige Öl aus Schritt 300 sowie ggf. 500 mit Alkohol extrahiert (Schritt 600). Hierfür können unterschiedliche Alkohole verwendet werden. Sodann erfolgt eine Ölabtrennung (Schritt 700) vorzugweise im Zentrifugalfeld. Diese Alkoholextraktion der Ölphase kann ein- oder mehrfach wiederholt werden (Schritt 600', 700'). Der Alkohol wird bei der Ölabtrennung des Schrittes 700 mit den Phorbolestern abgetrennt, kann zurückgewonnen werden (Schritt 800) und kann wieder zur Extraktion im Schritt 600 verwendet werden.

Derart werden als Fraktionen eine Schalenfraktion I (nutzbar z.B. als Brennstoff), eine feuchte Mehl- bzw. Schrotphase II (nutzbar z.B. als Tierfutter), eine Ölphase III (nutzbar als Kraftstoff) und ggf. auch eine Phorbolesterphase IV (nutzbar im Pharmaziebereich) gewonnen. Die Wirtschaftlichkeit dieses Verfahrens ist besonders hoch.

Dabei ist der Einsatz von Alkoholen als Extraktionsmittel in Ölen als unproblematisch anzusehen. Gasdichte, explositionsgeschützte Komponenten können hier effizient eingesetzt werden. Restgehalte an Alkohol, auch Methanol ist unkritisch, da diese Öle hauptsächlich für die Verarbeitung zu Biodiesel eingesetzt werden. Zur Herstellung von Biodiesel wird dem Öl Methanol zugesetzt, so dass Restgehalte an Methanol nicht störend sind.

Die Extraktion von Phorbolestern mittels Alkohol wurde bereits im Labormaßstab durchgeführt und wird z.B. im Artikel "Optimization of conditions for the extraction of phorbol esters from Jatropha oil" beschrieben. Sie ist im Rahmen dieser Erfindung lediglich eine Option zur Gewinnung eines phorbolesterreduzierten Öls zum Einsatz in Schritt 400.

Prinzipiell kann jedoch auch der Schritt 400 mit Pflanzenöl (Raps, Soja, etc.) durchgeführt werden.

Nachfolgend seien Aspekte von Varianten der Erfindung näher beschrieben.

### Versuch 1:

800 g Jatropha Saat (Wildsaat von den Cap Verden) wurden manuell mit Hilfe einer Zange gebrochen. Die Schalen wurden manuell abgetrennt. Die Brechung erfolgte so, dass nur ein geringfügiger Anteil an Feinteilen und Staub entstand. Saat, Schalen und Fruchtfleisch wurden analysiert: Die Saat enthielt 91 % Trockensubstanz (TS), die zu 16 % aus Protein und zu 35,7 % aus Fett bestand. Die Schalenfraktion von 298 g (37,7 %) enthielt 91 % TS, die zu 3,3 % aus Protein und zu 0,4 % aus Fett bestand.

Die Kernfraktion von 502 g (62,3 %) enthielt 91 % TS, die zu 24,6 % aus Proteinen und zu 56,5 % aus Fett bestand.

Beide Fraktionen waren optisch rein getrennt, lediglich mit Spuren der jeweils anderen Fraktion.

Es zeigt sich insofern, dass durch das manuelle Schälen sehr wirksam Anteile der Jatropha-Saat entfernt werden, die einen relativ geringen Fettanteil aufweisen.

### Versuch 2:

1.013 kg Jatropha Saat (Wildsaat von den Cap Verden) wurden mittels einer Versuchsanlage der Fa. Probat geschält.

Das Brechen erfolgte mittels Reflexbrecher mit einem Spalt von 3 mm. Der Brecher wurde mit 1.300 UpM betrieben, die Durchsatzleistung betrug im Mittel 308 kg/h.

Die Abtrennung der Schalen erfolgte in einem Technikums- Windsichter. Die mittlere Durchsatzleistung betrug 296 kg/h.

Es wurden folgende Fraktionen erhalten:
1. 507 kg Kern- Fraktion (50 %)
2. 494 kg Schalen- Fraktion (48,8 %)
3. 12 kg Staubfraktion aus Abscheide Zyklon (1,2 %)

Die Schalen- Fraktion enthielt 91,4 % TS, die zu 7,3 % aus Proteinen und zu 7,8 % aus Fett besteht.

Die Kern- Fraktion enthielt 91,2 % TS, die zu 19,8 % aus Proteinen und zu 49,8 % aus Fett bestand.

Sowohl Kern- als auch Schalenfraktion wiesen optisch noch Anteile der jeweils anderen Fraktion auf.

Es zeigt sich insofern, dass auch durch das durch automatisierte Schälen im großen Umfang Anteile der Jatropha-Saat entfernet werden, die nur einen relativ geringen Fettanteil aufweisen.

### Versuch 3:

300 g geschälte, vermahlene Jatropha Saat wurde im Becherglas mit 450 g Wasser vermischt und im Wasserbad für 60 Minuten bei 90 °C gerührt. Hierbei stellte sich ein pH- Wert von 6,2 ein.

Eine weitere Probe wurde mit 90 ml HCl auf den pH- Wert von 3,0 eingestellt und ebenfalls für 60 Minuten im Wasserbad bei 90 °C gerührt.

Anschließend wurden die beiden Proben in einer heizbaren Laborzentrifuge für 3 Minuten bei 4.500 x g geschleudert.

Der Feststoff wurde anschließend auf den Restfettgehalt untersucht.

Während die Probe ohne pH- Verschiebung einen Restfettgehalt von 12,06 % (bezogen auf TS) aufwies, betrug der Restölgehalt der entölten Probe mit pH-Verschiebung lediglich 3,6.

Dies beweist den Vorteil der pH-Wert-Verschiebung.

### Versuch 4:

160 kg Wasser wurden in einem beheizbaren Rührbehälter indirekt auf 95 °C erwärmt. Anschließend wurden 112 kg geschälte, vermahlene Jatropha Saat eingegeben. Die Suspension wurde mit 5,8 kg konzentrierter Salzsäure auf einen pH-Wert von 3,0 eingestellt und die Suspension auf eine Temperatur von 90 °C eingestellt.

Die Suspension wurde für 60 Minuten im Behälter schonend gerührt. Anschließend wurde die Suspension im 2-Phasen Trenndekanter CA 220-08-33 (Westfalia Separator Group GmbH) in eine Öl- Phase und eine Phase entölter Suspension getrennt. Die Trommeldrehzahl betrug 4.750 UpM, die Differenzdrehzahl 18 UpM.

Die Zulaufleistung betrug 300 l/h und wurde mittels regelbarer Exzenterschneckenpumpe eingestellt.

Die Ablaufleistung der Öl- Phase betrug 63 l/h.

Der entölte Feststoff enthielt 34,8 % TS, mit 5,4 % Fett bezogen auf die Trockenmasse.

### Versuch 5:

180 kg bereits entölte Jatropha Suspension mit 34,8 % TS und 5,4 % Fett (aus Versuch 4) in der Trockensubstanz wurden in einem Rührbehälter mit 50 Liter Wasser vermischt.

Die Suspension wurde für 30 Minuten schonend gerührt, und dabei mittels indirekter Wärmezuführung auf 90 °C erwärmt.

Anschließend wurde die Suspension im 2-Phasen Trenndekanter CA 220-08-33 (Westfalia Separator Group GmbH) in eine Öl- Phase und eine Phase entölter Suspension getrennt. Die Trommeldrehzahl betrug 4.750 UpM, die Differenzdrehzahl 15 UpM.

Die Zulaufleistung betrug 300 l/h und wurde mittels regelbarer Exzenterschneckenpumpe eingestellt.

Die Ablaufleistung der Öl- Phase betrug 9 l/h.

Der entölte Feststoff enthielt 29,6 % TS, mit 3,9 % Fett bezogen auf die Trockenmasse.

Der Vergleich der Versuche 4 und 5 zeigt den Vorteil der Bildung der ölhaltigen Suspension gemäß Schritt c) des Anspruchs 1 und des Schritts d) des Anspruchs 1, insbesondere mit einem vorherigen Abtrennen des Schalenbestandteile (Versuch 4).

### Versuch 6:

36 kg so gewonnenes Jatropha Öl wurde in einem Rührbehälter mit 1 Liter Wasser vermischt und mit indirekter Wärmezuführung auf 90 °C erhitzt. Anschließend wurde die Ölphase in einer Vollmantelzentrifuge BTC 3-03-107 (Westfalia Separator Group GmbH) in eine Öl- und eine wässrige Phase getrennt. Im Öl befindliche Feststoffe wurden in der Trommel der Zentrifuge gesammelt und nach dem Versuch entfernt.

Die wässrige Phase enthielt 2,0 % TS und wies einen Fettgehalt von 0,05 % auf. Die Ölphase wies die folgenden Parameter auf:
Koksrückstand: 0,45 % (m/m); Oxidasche: < 0,005 % (m/m); Phosphor: < 0,5 mg/kg; Natrium: < 0,5 mg/kg; Magnesium: < 0,5 mg/kg; Calcium: < 0,5 mg/kg; Kalium: < 0,5 mg/kg; Aluminium: < 0,5 mg/kg; Eisen: < 0,5 mg/kg Sehr wesentlich ist hier der sehr geringe Phosphat- und Magnesiumgehalt der Ölphase.

Nach dem Versuch 4 wird zunächst eine Ölphase nach dem Verfahren des Anspruchs 1 gewonnen. Wie im Anspruch 12 beschreiben, kann die Ausbeute durch ein mehrfaches Entölen verbessert werden. Dies bestätigen sehr eindrucksvoll die jeweils optionalen Entölungen der Versuche 4, 5, und 6.

### Versuch 7: (Vergleich der Endprodukte Pressung vers. Wässrige Verfahren)

150 kg geschälte, vermahlene Jatropha Saat aus Versuch 2 (Cap Verden) wurden mit 190 kg Wasser in einem Rührbehälter vermischt. Durch Zugabe von 9,5 kg HCl (30 %ig) wurde ein pH- Wert von pH= 3,0 eingestellt.
Die Suspension wurde für 1 Stunde bei geringer Drehzahl gerührt und mittels Dampf (indirekt) auf 90 °C erwärmt.
Anschließend wurde die Suspension im 2-Phasen Trenndekanter CA 220-08-33 (Westfalia Separator Group GmbH) in eine Öl- Phase und eine Phase entölter Suspension getrennt. Die Trommeldrehzahl betrug 4.750 UpM, die Differenzdrehzahl 15 UpM.
Die Zulaufleistung betrug 700 l/h und wurde mittels regelbarer Exzenterschneckenpumpe eingestellt.
Der entölte Feststoff enthielt 33,8 % TS, mit 19,9 % Fett bezogen auf die Trockenmasse.

Die Entölte Suspension wurde mit 50 kg Wasser vermischt, im Rührbehälter auf 90 °C erwärmt und ein zweites Mal im 2-Phasen Trenndekanter CA 220-08-33 (Westfalia Separator Group GmbH) in eine Öl- Phase und eine Phase entölter Suspension getrennt.

Die Zulaufleistung betrug 500 l/h und wurde mittels regelbarer Exzenterschneckenpumpe eingestellt.
Der entölte Feststoff enthielt 27,9 % TS, mit 14,1 % Fett bezogen auf die Trockenmasse.
Parallel hierzu wurden eine Probe ungeschälten, vermahlenen Jatropha Saat (Cap Verden) in einer Labor Schnecken- Presse verarbeitet.
670 g Saat wurden in der Schnecken- Presse Komet CA59G in Pressöl und Presskuchen verarbeitet. Die Presse wurde mit fester Drehzahl und einem Austragsspalt von 8 mm betrieben.
Es wurden 422,6 g Presskuchen und 247,4 g Pressöl enthalten. Das Öl enthielt noch 10 % (v/v) Sediment, welches in einer Laborzentrifuge entfernt wurde. Anschließend wurden feine Feststoffe mittels eines Vakuumfiltration im Laborfilter (0,45 Mikrometer Porendurchmesser) aus dem Öl entfernt.
Ölproben und Presskuchen wurden analysiert und mit dem wässrigen Versuch verglichen.

| Phase | Analyse | Wässriges Verfahren | Schneckenpresse |
|---|---|---|---|
| Saat | TS (%,m/m) | 96 | 96 |
| | Fett (%, auf TS) | 32,2 | 32,2 |
| | PE (%, auf TS) | 0,225 | 0,225 |
| | Protein (%, auf TS) | 13,6 | 13,6 |
| Öl | PE (%, auf TS) | 0,504 | 0,625 |
| | Phosphor (mg/kg) | 9,0 | 66,3 |
| | Magnesium (mg/kg) | 3,0 | 17,1 |
| Schalen | Fett (%, auf TS) | 7,3 | - |
| | Protein (%, auf TS) | 7,3 | - |
| | PE (%, auf TS) | 0,06 | - |
| Schrot | Fett (%, auf TS) | 14,1 | 5,8 |
| | Protein (%, auf TS) | 46,1 | 25,9 |
| | PE (%, auf TS) | 0,07 | 0,10 |

Der Gehalt und Magnesium des im wässrigen Verfahren gewonnenen Öls wurde durch einfache Waschung mit Wasser auf Werte unterhalb der Nachweisgrenze gesenkt.

### Versuch 8: (Extraktion von PE mittels Pflanzenöl)

100 g im wässrigen Verfahren entöltes Produkt mit 35,0 % TS und 4,9 % Restölgehalt wurde in einem Becherglas mit 10 g Rapsöl vermischt und im Wasserbad auf 90 °C erhitzt.
Die Konzentration von PE in der wässrigen Probe wurde mit 0,026 % bestimmt. Dies entspricht einer Konzentration von PE bezogen auf das Öl vor Fremdölzugabe von 0,53 %.
Das Rapsöl war PE frei.
Nach Zugabe des Rapsöls beträgt die PE Konzentration des Mischöls rechnerrisch 0,17 %.
Nach Erreichen der Temperatur wurde die Probe mittels Laborzentrifuge in eine Öl- Phase und eine wässrige Feststoffphase getrennt.
Die beheizbare Laborzentrifuge wurde bei 90 °C mit 6.000 U/min betrieben. Dies entspricht einer mittleren Zentrifugalbeschleunigung von 4.500 x g. Die Proben wurden für 3 Minuten geschleudert.

Die PE Konzentration im so gewonnenen Öl betrug 0,27 %, die Konzentration im entölten Feststoff verringerte sich von 0,026 % auf 0,014 %.

### Versuch 9: (Extraktion von PE aus Jatropha- Öl mittels Ethanol)

100 g Jatropha Öl wurden mit 200 g Ethanol vermischt und im Wasserbad auf 50 °C erwärmt. Zur Untersuchung des Einflusses der Alkoholkonzentration wurden hierbei Ethanolkonzentrationen von 30 - 90 % (m/m) verwendet.

Um eine Trennung des Alkohols und Öls zu verhindern, wurde das Gemisch mittels eines Magnetrührers intensiv vermischt.
Nach 10 Minuten Reaktionszeit wurde das Gemisch in einer beheizbaren Laborzentrifuge in eine Öl und Alkoholphase getrennt.
Die beheizbare Laborzentrifuge wurde bei 50 °C mit 6.000 U/min betrieben. Dies entspricht einer mittleren Zentrifugalbeschleunigung von 4.500 x g. Die Proben wurden für 3 Minuten geschleudert.

Die Ölphase wurde vorsichtig abgetrennt und auf PE untersucht:

| **Konzentration (Alkohol %m/m)** | **PE (%, auf TS)** | **PE Reduzierung (%)** |
|---|---|---|
| Öl | 0,304 | 0 |
| 0 | 0,275 | 9,54 |
| 30 | 0,299 | 1,64 |
| 50 | 0,255 | 16,5 |
| 70 | 0,114 | 62,5 |
| 90 | 0,070 | 77,0 |

### Bezugszeichenliste

- 1: Mühle
- 2: Puffertank
- 3: Exzenterschneckenpumpe
- 4: Mischstation
- 5: Verweilbehälter
- 6: Rührwerk
- 7: Exzenterschneckenpumpe
- 8: Dekanter
- 9: Puffertank
- 10: Exzenterschneckenpumpe
- 11: Wärmetauseher
- 12: Zentrifuge

## Patentansprüche

1. Verfahren zur Reduzierung des Phorbolestergehaltes eines Jatrophasamenschrotes mit folgenden Verfahrensschritten:
400) Zugabe von phorbolestergehaltfreiem oder zumindest phorbolestergehaltreduziertem Öl, insbesondere Pflanzenöl; zu dem Schrot und
500) Abscheiden von Extraktionsöl aus der Schrotfraktion aus Schritt 400) insbesondere im Zentrifugalfeld zur Gewinnung der phorbolestergehaltreduzierten Schrotfraktion.

2. Verfahren zur lösungsmittelfreien Fraktionierung geschälter und zerkleinerter Jatropha-Samen, die einen Phorbolestergehalt aufweisen, bei dem mindestens folgende Fraktionen gewonnen werden:
- eine im Phorbolestergehalt relativ zum Phorbolestergehalt der Jatrophasamen reduzierte Schrotfraktion (I); und
- ein Phorbolester enthaltendes Jatrophaöl (III),
mit zumindest folgenden Verfahrensschritten:
Bereitstellen von geschälten und zerkleinerten Jatropha-Samen
200) Zugabe von Wasser und Säure zu den zerkleinerten Jatrophasamen unter Bildung einer ölhaltigen Suspension, wobei der pH-Wert der Suspension auf <= 3,5 eingestellt wird;
300) Abscheiden von Jatrophaöl aus der ölhaltigen Suspension, vorzugsweise im Zentrifugalfeld zur Bildung der Jatrophaölfraktion und der Schrotfraktion;
wobei die Schrotfraktion nach einem Verfahren zur Reduzierung des Phorbolestergehaltes eines Jatrophasamenschrotes gemäß Anspruch 1 bearbeitet wird.

3. Verfahren zur lösungsmittelfreien Fraktionierung einer ungeschälten Jatropha-Saat, die einen Phorbolestergehalt aufweist, bei dem mindestens folgende Fraktionen gewonnen werden:
- eine Schalenfraktion (I)
- eine im Phorbolestergehalt relativ zum Phorbolestergehalt der Saat reduzierte Schrotfraktion (II);
- ein Phorbolester enthaltendes Jatrophaöl (III),
mit zumindest folgenden Verfahrensschritten:
50) Schälen der Saat unter Bildung der Schalenfraktion und einer geschälten Jatrophasamen-Fraktion;
100) Zerkleinern der geschälten Jatrophasamen;
und wobei eine lösungsmittelfreie Fraktionierung der geschälten und zerkleinerten Jatropha-Samen , die einen Phorbolestergehalt aufweisen, bei dem mindestens folgende Fraktionen gewonnen werden:
- eine im Phorbolestergehalt relativ zum Phorbolestergehalt der Jatrophasamen reduzierte Schrotfraktion (I); und
- ein Phorbolester enthaltendes Jatrophaöl (III),
nach dem Verfahren des Anspruchs 2 erfolgt.

4. Verfahren nach Anspruch 2 oder 3, **dadurch gekennzeichnet, dass** das im Schritt 300) abgeschiedene Jatrophaöl - ein Rohöl - ölpoliert wird.

5. Verfahren nach Anspruch 2-4, **dadurch gekennzeichnet, dass** der pH-Wert im Schritt 200 auf <= 3,2 eingestellt wird.

6. Verfahren nach Anspruch 5, **dadurch gekennzeichnet, dass** im Schritt 200) Säure und Wasser, insbesondere Salzsäure und Wasser zugegeben werden.

7. Verfahren nach einem der vorhergehenden Ansprüche, **dadurch gekennzeichnet, dass** nach der Zugabe von Wasser und Säure im Schritt 200) vor Schritt 300) eine Verweilzeit von mindestens 30 min, vorzugsweise 30-60 min, eingehalten wird (Schritt 250).

8. Verfahren nach einem der vorhergehenden Ansprüche, **dadurch gekennzeichnet, dass** in den Schritten 300) und/oder 500) eine Verarbeitung in einem Dekanter erfolgt, welcher das erforderliche Zentrifugalfeld erzeugt.

9. Verfahren nach einem der vorhergehenden Ansprüche, **dadurch gekennzeichnet, dass** die ölhaltige Suspension des Schrittes 400) vor dem Abscheiden der Ölphase eine Temperatur von 60-80°C aufweist.

10. Verfahren nach Anspruch 9, **dadurch gekennzeichnet, dass** die ölhaltige Suspension des Schrittes 400) vor dem Abscheiden der Ölphase eine Temperatur von 80-95°C aufweist.

11. Verfahren nach einem der vorhergehenden Ansprüche, **dadurch gekennzeichnet, dass** im Schritt 300) ein Wasser-zu-Produkt-Verhältnis im Bereich von 1/2 bis 2/1 eingestellt ist.

12. Verfahren nach einem der vorhergehenden Ansprüche, **dadurch gekennzeichnet, dass** der Wasseranteil der Suspension in Schritt 200) größer als 35 Gew.-%, vorzugsweise größer als 40 Gew.-%, bezogen auf die Gesamtmasse der Suspension, ist.

13. Verfahren nach einem der vorhergehenden Ansprüche, **dadurch gekennzeichnet, dass** vor dem Zerkleinern der Pflanzensamen in Schritt 20 ein Reinigen der Jatrophasamen erfolgt.

14. Verfahren nach einem der vorhergehenden Ansprüche, **dadurch gekennzeichnet**, das im Schritt 400 Pflanzenöl zugesetzt wird.

15. Verfahren nach einem der vorhergehenden Ansprüche, bei dem im Schritt 400) Pflanzenöl im Verhältnis zwischen 1/10 bis 1/1 - 1. Wert: Pflanzenöl; 2. Wert:
Restölgehalt in Schrotfraktion - eingesetzt wird.

16. Verfahren nach einem der vorhergehenden Ansprüche, **dadurch gekennzeichnet**, das im Schritt 400 Jatrophaöl eingesetzt wird, aus dem zuvor die Phorbolester abgetrennt wurden .

17. Verfahren nach einem der vorhergehenden Ansprüche, bei dem im Schritt 400) als Pflanzenöl ein im Phorbolestergehalt reduziertes, insbesondere phorbolestergehaltfreies Jatrophaöl im Verhältnis 1/2 eingesetzt wird.

18. Verfahren nach einem der vorhergehenden Ansprüche, **dadurch gekennzeichnet, dass** nach dem optionalen Reinigen und vor dem Zerkleinern der Pflanzensamen oder Nüssen ein Trocknen der Pflanzensamen oder Nüsse erfolgt.

19. Verfahren nach einem der vorhergehenden Ansprüche, **dadurch gekennzeichnet, dass** das Abscheiden der Ölphase durch eine mehrfache Entölung der Suspension erfolgt.

20. Verfahren nach einem der vorhergehenden Ansprüche, **dadurch gekennzeichnet, dass** das Phorbolester als Konzentrat gewonnen wird

21. Verfahren nach Anspruch 1, **dadurch gekennzeichnet, dass** die Schritte 400) und 500) mehrfach durchlaufen werden.

22. Verfahren nach Anspruch 1, **dadurch gekennzeichnet, dass** es sich bei dem Jatrophasamenschrot um einen entölten Jatrophasamenschrot handelt.

## Claims

1. Method for reducing the phorbol ester content of a jatropha seed meal comprising the following method steps:
400) addition of oil that is free of phorbol esters or at least has a reduced phorbol ester content, in particular vegetable oil, to the meal; and
500) separation of extraction oil from the meal fraction from step 400), in particular in a centrifugal field, in order to obtain the meal fraction having a reduced phorbol ester content.

2. Method for the solvent-free fractionation of dehulled and comminuted jatropha seeds that have a phorbol ester content, in which at least the following fractions are obtained:
- a meal fraction (I) having a reduced phorbol ester content relative to the phorbol ester content of the jatropha seeds; and
- a jatropha oil (III) containing phorbol esters,
comprising at least the following method steps:
provision of dehulled and comminuted jatropha seeds;
200) addition of water and acid to the comminuted jatropha seeds to form an oil-containing suspension, wherein the pH value of the suspension is adjusted to <= 3.5;
300) separation of jatropha oil from the oil-containing suspension, preferably in a centrifugal field, to form the jatropha oil fraction and the meal fraction;
wherein the meal fraction is processed in accordance with a method for reducing the phorbol ester content of a jatropha seed meal according to Claim 1.

3. Method for the solvent-free fractionation of jatropha seed that has not been dehulled and that has a phorbol ester content, in which at least the following fractions are obtained:
- a husk fraction (I);
- a meal fraction (II) having a reduced phorbol ester content relative to the phorbol ester content of the seed;
- a jatropha oil (III) containing phorbol esters,
comprising at least the following method steps:
50) dehulling of the seed to form the husk fraction and a dehulled jatropha seed fraction;
100) comminution of the dehulled jatropha seeds;
and wherein a solvent-free fractionation of the dehulled and comminuted jatropha seeds that have a phorbol ester content, in which at least the following fractions are obtained:
- a meal fraction (I) having a reduced phorbol ester content relative to the phorbol ester content of the jatropha seeds; and
- a jatropha oil (III) containing phorbol esters,
is carried out in accordance with the method of Claim 2.

4. Method according to Claim 2 or 3, **characterized in that** the jatropha oil separated in step 300) - a crude oil - is subject to oil polishing.

5. Method according to Claims 2 - 4, **characterized in that** the pH value in step 200 is adjusted to <= 3.2.

6. Method according to Claim 5, **characterized in that** acid and water, in particular hydrochloric acid and water, are added in step 200).

7. Method according to one of the preceding claims, **characterized in that**, after the addition of water and acid in step 200), a dwell time of at least 30 minutes, preferably from 30 to 60 minutes, is observed (step 250) before step 300).

8. Method according to one of the preceding claims, **characterized in that** in steps 300) and/or 500) processing takes place in a decanter, which produces the required centrifugal field.

9. Method according to one of the preceding claims, **characterized in that** the oil-containing suspension of step 400) has a temperature of from 60 to 80°C before separation of the oil phase.

10. Method according to Claim 9, **characterized in that** the oil-containing suspension of step 400) has a temperature of from 80 to 95°C before separation of the oil phase.

11. Method according to one of the preceding claims, **characterized in that** a water-to-product ratio in the range of from 1/2 to 2/1 is established in step 300).

12. Method according to one of the preceding claims, **characterized in that** the water content of the suspension in step 200) is greater than 35 % by weight, preferably greater than 40 % by weight, based on the total mass of the suspension.

13. Method according to one of the preceding claims, **characterized in that** cleaning of the jatropha seeds is carried out prior to comminution of the plant seeds in step 20.

14. Method according to one of the preceding claims, **characterized in that** vegetable oil is added in step 400.

15. Method according to one of the preceding claims, wherein vegetable oil is used in step 400) in a ratio of from 1/10 to 1/1 - 1st value:
vegetable oil; 2nd value: residual oil content in the meal fraction.

16. Method according to one of the preceding claims, **characterized in that** jatropha oil from which the phorbol esters have previously been separated is used in step 400.

17. Method according to one of the preceding claims, wherein there is used in step 400) as the vegetable oil a jatropha oil that has a reduced phorbol ester content, in particular that is free of phorbol esters, in a ratio of 1/2.

18. Method according to one of the preceding claims, **characterized in that** drying of the plant seeds or nuts is carried out after the optional cleaning and before comminution of the plant seeds or nuts.

19. Method according to one of the preceding claims, **characterized in that** the separation of the oil phase is carried out by repeated de-oiling of the suspension.

20. Method according to one of the preceding claims, **characterized in that** the phorbol ester is obtained in the form of a concentrate.

21. Method according to Claim 1, **characterized in that** steps 400) and 500) are run through repeatedly.

22. Method according to Claim 1, **characterized in that** the jatropha seed meal is a de-oiled jatropha seed meal.

## Revendications

1. Procédé pour réduire la teneur en esters de phorbol d'un gruau de graines de jatropha, comprenant les étapes suivantes :
400) ajout aux gruau d'huile, en particulier d'huile végétale, ne contenant pas d'esters de phorbol ou tout au moins à teneur en esters de phorbol réduite et
500) séparation de l'huile d'extraction à partir de la fraction de gruau de l'étape 400), en particulier dans un champ centrifuge, pour obtenir une fraction de gruau à teneur en esters de phorbol réduite.

2. Procédé pour le fractionnement sans solvants de graines de jatropha décortiquées et broyées contenant des esters de phorbol, dans lequel les fractions suivantes, au minimum, sont obtenues :
- une fraction de gruau (I) ayant une teneur en esters de phorbol réduite par rapport à la teneur en esters de phorbol des graines de jatropha et
- une huile de jatropha (III) contenant des esters de phorbol,
comprenant au moins les étapes de procédé suivantes :
préparation de graines de jatropha décortiquées et broyées
200) addition d'eau et d'acide aux graines de jatropha broyées pour former une suspension contenant de l'huile dont le pH est ajusté à ≤ 3,5 ;
300) séparation de l'huile de jatropha à partir de la suspension contenant de l'huile, de préférence dans un champ centrifuge, pour former la fraction d'huile de jatropha et la fraction de gruau,
laquelle fraction de gruau est traitée par un procédé pour réduire la teneur en esters de phorbol d'un gruau de graines de jatropha selon la revendication 1.

3. Procédé pour le fractionnement sans solvants de semences de jatropha non décortiquées contenant des esters de phorbol, dans lequel les fractions suivantes, au minimum, sont obtenues :
- une fraction de balle (I) ;
- une fraction de gruau (II) ayant une teneur en esters de phorbol réduite par rapport à la teneur en esters de phorbol des semences ;
- une huile de jatropha (III) contenant des esters de phorbol,
comportant au moins les étapes de procédé suivantes :
50) décortication des graines pour former la fraction de balle et une fraction de graines de jatropha décortiquées ;
100) broyage des graines de jatropha décortiquées ;
et dans lequel un fractionnement sans solvant des graines de jatropha décortiquées et broyées contenant des esters de phorbol, au cours duquel les fractions suivantes, au minimum, sont obtenues :
- une fraction de gruau (I) ayant une teneur en esters de phorbol réduite par rapport à la teneur en esters de phorbol de la graine ; et
- une huile de jatropha (III) contenant des esters de phorbol est exécuté par le procédé selon la revendication 2.

4. Procédé selon la revendication 2 ou 3, **caractérisé en ce que** l'huile de jatropha séparée dans l'étape 300), qui est une huile brute, est soumise à une purification.

5. Procédé selon la revendication 2-4, **caractérisé en ce que** le pH est ajusté à une valeur ≤ 3,2 dans l'étape 200).

6. Procédé selon la revendication 5, **caractérisé en ce que** de l'acide et de l'eau, en particulier de l'acide chlorhydrique et l'eau, sont ajoutés dans l'étape 200).

7. Procédé selon l'une des revendications précédentes, **caractérisé en ce qu'**après l'ajout de l'eau et de l'acide dans l'étape 200), un temps de contact d'au moins 30 minutes, de préférence de 30 à 60 minutes, est respecté (étape 250) avant l'étape 300).

8. Procédé selon l'une des revendications précédentes, **caractérisé en ce que** dans les étapes 300) et/ou 500), le traitement a lieu dans un décanteur qui produit le champ centrifuge requis.

9. Procédé selon l'une des revendications précédentes, **caractérisé en ce que** la suspension contenant de l'huile de l'étape 400) a une température de 60 à 80 °C avant la séparation de la phase huileuse.

10. Procédé selon la revendication 9, **caractérisé en ce que** la suspension contenant de l'huile de l'étape 400) a une température de 80 à 95 °C avant la séparation de la phase huileuse.

11. Procédé selon l'une des revendications précédentes, **caractérisé en ce qu'**un rapport entre le produit et l'eau compris entre 1 pour 2 et 2 pour 1 est établi dans l'étape 300).

12. Procédé selon l'une des revendications précédentes, **caractérisé en ce que** la teneur en eau de la suspension dans l'étape 200) est supérieure à 35 % en poids, de préférence supérieure à 40 % en poids, sur la base de la masse totale de la suspension.

13. Procédé selon l'une des revendications précédentes, **caractérisé en ce qu'**un nettoyage des graines de jatropha est effectué avant le broyage des graines de la plante dans l'étape 20.

14. Procédé selon l'une des revendications précédentes, **caractérisé en ce que** de l'huile végétale est ajoutée dans l'étape 400).

15. Procédé selon l'une des revendications précédentes, dans lequel de l'huile végétale est utilisée dans l'étape 400) dans un rapport compris entre 1 pour 10 et 1 pour 1 (1^{ère} valeur : huile végétale, 2^{ème} valeur : teneur en huile résiduelle dans la fraction de gruau).

16. Procédé selon l'une des revendications précédentes, **caractérisé en ce que** de l'huile de jatropha de laquelle les esters de phorbol ont été séparés au préalable est utilisée dans l'étape 400).

17. Procédé selon l'une des revendications précédentes, dans lequel l'huile végétale utilisée dans l'étape 400) est de l'huile de jatropha dont la teneur en esters de phorbol est réduite, en particulier sans esters de phorbol, utilisée dans un rapport de 1 pour 2.

18. Procédé selon l'une des revendications précédentes, **caractérisé en ce que** les graines ou les noix sont séchées après le nettoyage facultatif et avant leur broyage.

19. Procédé selon l'une des revendications précédentes, **caractérisé en ce que** la séparation de la phase huileuse est réalisée par plusieurs déshuilages de la suspension.

20. Procédé selon l'une des revendications précédentes, **caractérisé en ce que** l'ester de phorbol est obtenu sous la forme d'un concentré.

21. Procédé selon la revendication 1, **caractérisé en ce que** les étapes 400) et 500) sont exécutées plusieurs fois.

22. Procédé selon la revendication 1, **caractérisé en ce que** le gruau de graines de jatropha est un gruau de graines de jatropha déshuilé.
